# EUROPEAN PATENT SPECIFICATION

(11) **EP 0 322 840 B1**
(45) Date of publication and mention of the grant of the patent: **03.03.1993**
(21) Application number: 88121683.2
(22) Date of filing: 27.12.1988
(51) Int. Cl.: G11B 7/085, G11B 7/095

(54) **Optical disk apparatus**
Optisches Plattenspielgerät
Appareil de disque optique

(30) Priority: 26.12.1987 JP 330491/87
(43) Date of publication of application: 05.07.1989
(73) Proprietor: KABUSHIKI KAISHA TOSHIBA, Kawasaki-shi, Kanagawa-ken 210 (JP)
(72) Inventor: Ikeda, Hidetoshi c/o Patent Division, Minato-ku Tokyo 105 (JP)
(74) Representative: Henkel, Feiler, Hänzel & Partner

(56) References cited:
- EP-A- 0 098 076
- DE-A- 3 608 269
- FR-A- 2 505 074
- GB-A- 2 029 051
- US-A- 4 736 353
- PROCEEDINGS OF SPIE vol. 421, June 1983, page 136 - 142; INADA ET AL: "TRACKING SERVO SYSTEM WITH NEW OPTICAL HEAD LOCKED OBJECTIVE LENS"

## Description

The present invention generally relates to an optical disk apparatus, and, more particularly, to an optical disk apparatus which rotates a memory disk relative to an optical head so as to optically record data on, or reproduce data from, the memory disk.

In the optical head arranged closed to one surface of the rotating optical disk, a laser beam generated by a semiconductor laser is converged on the optical disk by an objective lens for data recording or data reproduction. The optical head is subjected to tracking control so that the converged laser beam follows the tracks on the optical disk, or it is subjected to focus control so that the laser beam is focused on a target track on the optical disk by the objective lens.

The optical disk apparatus comprises a linear motor for moving the optical head in the radial direction of an optical disk in coarse access mode and an objective lens moving mechanism for driving the objective lens in fine access mode, as described in U.S.P. 4,037,252.

In accessing a desired or target track on an optical disk with a focused laser beam, first, the linear motor is operated in coarse access mode to move the optical head for coarse accessing to the target track. Then, the track position on the optical disk is read out by the laser beam, and, if the difference between the read track and the target track is small and within an allowable range, the mode is changed to the fine access mode from the coarse access mode. In fine access mode, the objective lens is moved to finely access the track. If the mentioned difference between the read and target tracks is large, the coarse access mode is maintained and the linear motor is again driven in this mode for coarse track accessing.

In coarse access mode, an optical scale provided at the optical head is read by a position detector so that the position and displacement of the scale are measured.

The irradiation position of the laser beam converged on the optical disk depends on the position of the optical head moved by the linear motor and the position of the objective lens provided in the optical head. Even if the linear motor is accurately moved over the distance to the target track in coarse access mode, however, the reaction of the acceleration or deceleration of the linear motor would move the objective lens in the optical head to significantly deviate the lens from where it was before the accessing action. This reduces the accessing accuracy and makes a high-speed access difficult.

In other words, the objective lens is generally provided at one end of a wire suspension secured at the other end to a fixed section and is movably suspended. Therefore, the acceleration or deceleration force of the linear motor is likely to swing the objective lens. If the tracking control starts before the swinging of the lens stops in order to realize high-speed accessing, therefore, the position of the objective lens after the coarse accessing carried out by the linear motor would be significantly deviated from the position of the lens before this accessing action.

As a result, in coarse access mode, the swinging of the objective lens reduces the access accuracy and cannot ensure stable tracking, thus requiring a longer accessing time.

Prior art document DE-A1-36 08 269 discloses an optical apparatus for recording and/or reproducing information in tracks of an optical disk, which comprises a lens holder resiliently mounted by a pair of parallel leaf springs in a rectangular frame consisting of two permanent magnets and two magnet yokes, an objective lens being mounted therein. The position of the lens holder is detected by a sensor. When performing an accessing operation in a coarse access mode, the objective lens is held at an equilibrium position determined in advance so that the objective lens is prevented from being deviated from the equilibrium position.

Further, prior art document FR-A1-2 505 074 discloses an optical apparatus for information recording, said apparatus comprising an optical disk driven by a motor, an optical head movable by a linear motor, an objective lens movable by coils, a track sensor, and an electronic controller circuit. When the optical head is directed to move from a first track of the optical disk to a second track not located near by the first track, the entire optical head is moved by the linear motor. This movement is controlled by utilizing the output signal of a position detector equipped with an optical scale. When the optical head is moved by the linear motor, the movable objective lens is directed by the coils to be located in a position at the middle of its deflection range.

Finally, prior art document GB-A-2 029 051 discloses an apparatus for reading a disk-shaped record carrier, wherein a radial-scanning position of a read element pivotably mounted around a spindle is controlled with the aid of a first servo control loop, which turns the read element depending on a control signal which is read from the record carrier. If the control signal falls because of track drop-out, a second servo control loop becomes operative. The apparatus exhibits an optical position indicator for detecting the position of the read element comprising a vane which has a suitable shape and which is connected to the spindle. This vane has such dimensions and is arranged so that its end is disposed between a light-emitting diode and a photodetector. Depending on the angular position of the read element, said vane shields the photodetector from the radiation beam to a greater or smaller extent, and the amount of light measured by this photodetector is used as a position signal for the read element.

It is an object of the present invention to provide an optical disk apparatus which can suppress the swinging of the objective lens in coarse access mode to improve the accessing accuracy in this mode, can ensure stable tracking for higher accessing accuracy, and shorten the required access time.

To solve this object the present invention provides an optical disk apparatus as specified in claim 1.

This invention can be more fully understood from the following detailed description when taken in conjunction with the accompanying drawings, in which:
Fig. 1 is a block diagram schematically illustrating an optical disk according to one embodiment of this invention;
Fig. 2 is a diagram illustrating an essential section for suppressing the swinging of an objective lens in rough access mode;
Fig. 3 is a schematic plan view illustrating the structure of an optical head shown in Fig. 1;
Fig. 4 is a graph illustrating the relation between the position of the objective lens and the detection output of position detector both shown in Fig. 1; and
Fig. 5 is a flowchart for explaining the operation of the optical disk apparatus shown in Fig. 1.

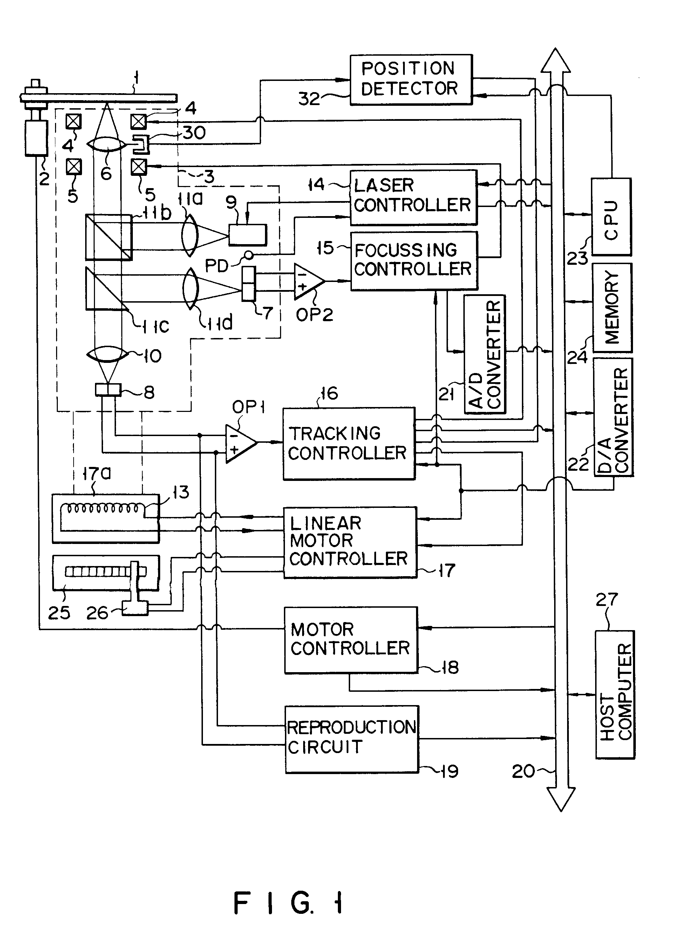

Fig. 1 schematically illustrates an optical disk apparatus according to one embodiment of this invention.

An optical disk 1 shown in Fig. 1 has grooves (tracks) formed in spiral or concentrically on its surface, and this disk 1 is rotated at, for example, a constant speed by a motor 2 that is controlled by a motor controller 18.

Optical disk 1 comprises a disk-shaped substrate of, for example, glass or plastic, and a recording layer, which is coated on the substrate.

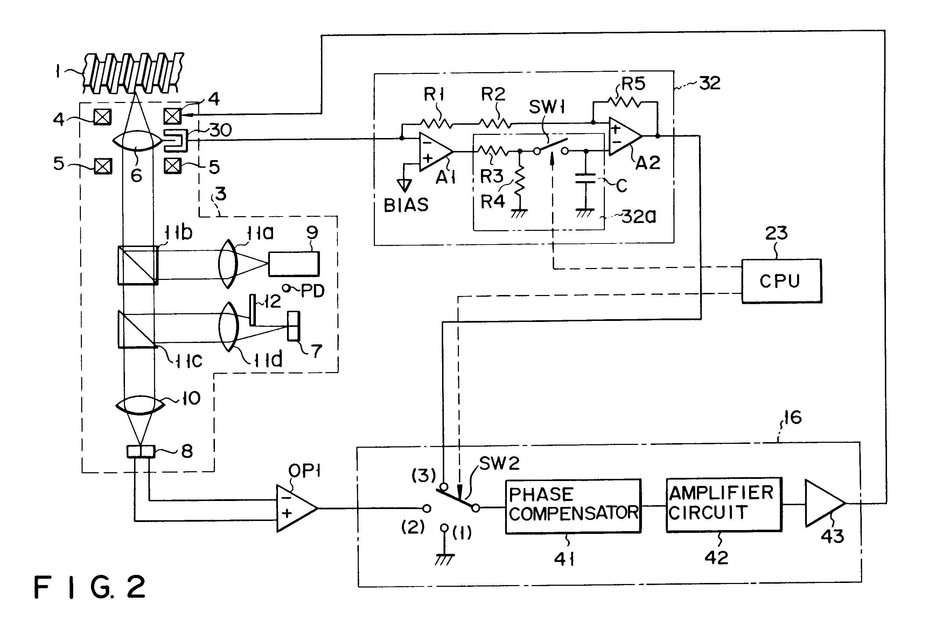

Close under optical disk 1 is disposed an optical head 3. As disclosed in U.S. Patent No. 4,684,797 (Ando et al.), this optical head 3 comprises, as shown in Fig. 2, an objective lens 6, drive coils 4 and 5 for driving the objective lens 6, a pair of focus sensors 7, a pair of track sensors 8, a semiconductor laser 9, a focusing lens 10, a collimator lens 11a, half prisms 11b and 11c, a knife edge 12 and a photosensor PD. (See U.S. Patent No. 4,684,797 for the detail description of the optical system.)

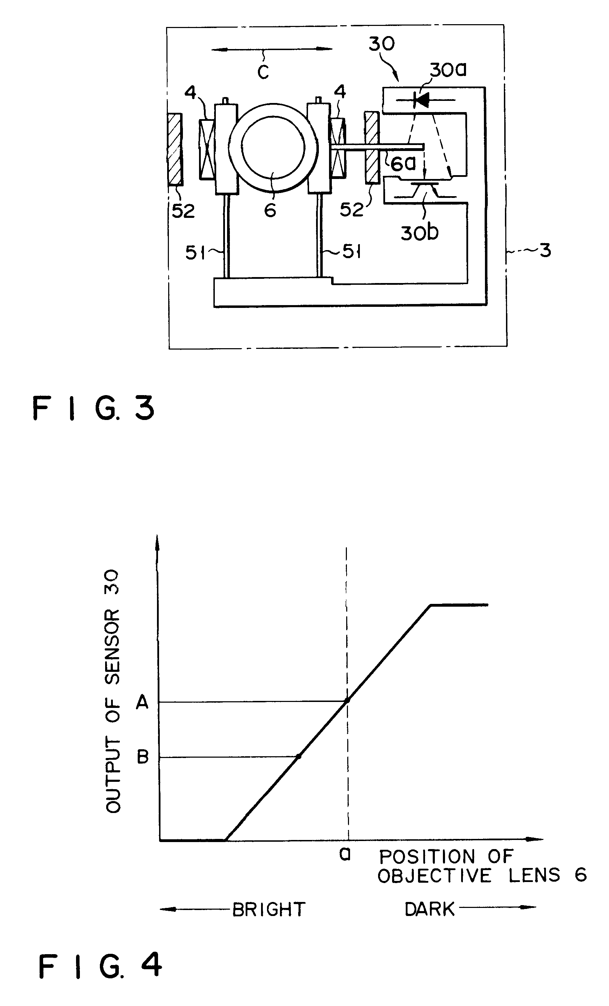

Objective lens 6 is suspended from a fixed section (not shown) by wire suspensions 51 as shown in Figs. 2 and 3. This objective lens 6, when driven by drive coil 5, is movable in the focusing direction (i.e., in the direction of the optical axis of the lens), and it is movable in the tracking direction (perpendicular to the optical axis of the lens) when driven by drive coil 4.

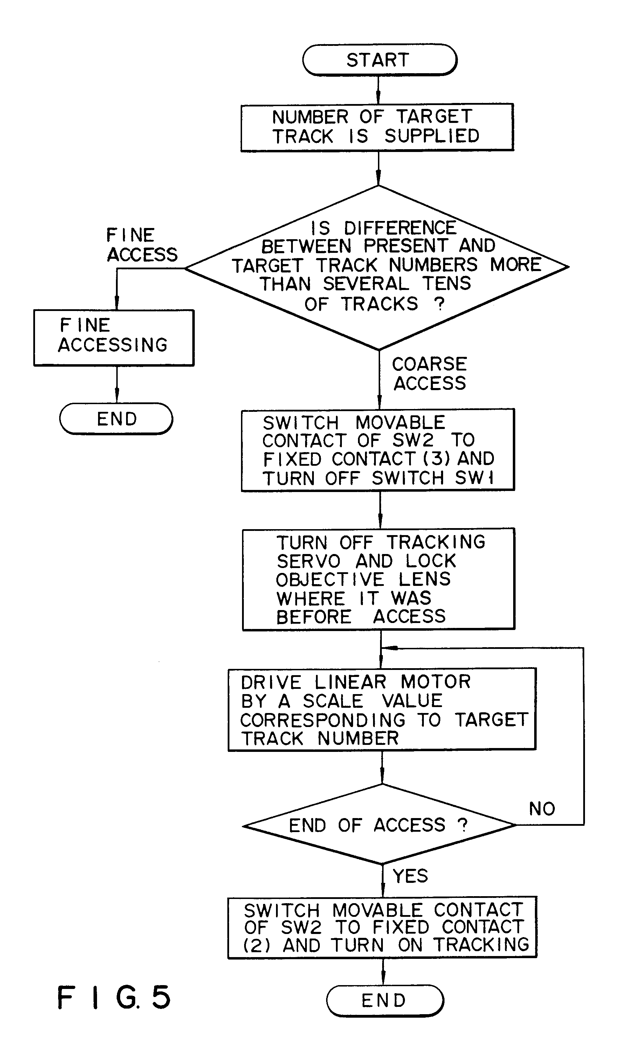

Objective lens 6 is moved in the directions of the arrow C in Fig. 5, i.e., in the directions perpendicular to the optical axis of objective lens 6, by the mutual action of drive coils 4 and permanent magnets provided at fixed sections.

On a side section of objective lens 6 is provided a light-shielding plate 6a that moves with this lens 6. A sensor 30 is secured to the main body of optical head 3 at a position facing light-shielding plate 6a. This sensor 30 is a photointerrupter type, which is constituted by an LED (light emitting diode) 30a for generate a light beam and a phototransistor 30b for sensing the light beam or a part of the light beam.

Sensor 30 generates an electrical detection signal corresponding to the position of light-shielding plate 6a and the position signal is supplied to a position detector 32. For instance, when objective lens 6 is located in the middle of permanent magnets 52, a half of light beam from LED 30a is shielded by light-shielding plate 6a, and phototransistor 30b outputs an electric signal of a middle level as a consequence. In this manner, phototransistor 30b outputs an electric signal of a level that corresponds to the moved position of objective lens 6.

Referring to Fig. 2, the arrangement of position detector 32 will be described below.

A detection signal from sensor 30 is supplied a current-voltage converter A1 which converts the current signal into a corresponding voltage signal. This voltage signal is supplied to an RC filter 32a. The output of current-voltage converter A1 is fed back to the inverting input terminal thereof through a resistor R1 and is also supplied to a non-inverting input terminal of a differential amplifier A2 through a resistor R2.

RC filter 32a has resistors R3 and R4, a capacitor C and a change-over switch SW1 located between resistor R4 and capacitor C. This change-over switch SW1 is rendered ON or OFF by a change-over signal from CPU 23; during the ON duration of switch SW1, a voltage signal from current-voltage converter A1 is accumulated in capacitor C, whereas during the OFF duration, a voltage signal immediately before the switch SW1 is rendered OFF is accumulated in capacitor C.

The time constant of RC filter 32a is set sufficiently smaller than the response time for objective lens 6. The output of RC filter 32a is supplied to an inverting input terminal of differential amplifier A2 which outputs a voltage signal corresponding to the difference between the output of differential amplifier A1 and the output of RC filter 32a.

The output of differential amplifier A2 is supplied to tracking controller 16 as well as fed back to the non-inverting input terminal of differential amplifier A2 through a resistor R5. The aforementioned resistors R1 to R5 have the same resistance.

During the ON duration of change-over switch SW1, differential amplifier A2 has an output signal of level "0" irrespective of the moved position of objective lens 6. The output of current-voltage converter A1 is supplied to capacitor 3 through change-over switch SW1 and resistor R3. Accordingly, the voltage signal corresponding to the moved position of objective lens 6 is accumulated in capacitor C. During the OFF duration, the output of current-voltage converter A1 is supplied to the inverting input terminal of differential amplifier A2 through resistor R2. At this time, the voltage signal acquired before the OFF state of change-over switch SW1 is accumulated in capacitor C and this voltage signal is supplied to the non-inverting input terminal of differential amplifier A2.

Accordingly, when objective lens 6 is located at the same position as it was before the switching operation of change-over switch SW1, the output of level "0" is output from differential amplifier A2. When objective lens 6 is moved from where it was before the switching operation of change-over switch SW1, differential amplifier A2 outputs a position deviation signal corresponding to the amount of displacement of objective lens 6.

Fig. 4 illustrates the sensing characteristic of sensor 30, which represents the detection outputs of sensor 30 with respect to different positions of objective lens 6. When objective lens 6 is located at the center position a, the detection output of sensor 30 is A. An offset voltage may be added to the detection output of sensor 30 with respect to the center position of objective lens 6 due to reduction in output of sensor 30 with age, a change in the ambient temperature, or the like, thereby changing the detection output to B. Even in this case, the position deviation signal properly reflects this change to B. Even if an offset voltage is added to the detection output of sensor 30, therefore, the detected content of position detector 32 would not vary and require no adjustment of this offset.

This optical head 3 is secured to a drive coil 13, which constitutes the movable section of a linear motor 17a, and this drive coil 13 is coupled to a linear motor controller 17. This linear motor controller 17 is coupled with a linear motor position detector 26, which detects an optical scale 25 provided in optical head 3 and produces a position signal.

The fixed section of the linear motor 17a is provided with a permanent magnet (not shown). Drive coil 13 is excited by linear motor controller 17 so that optical head 3 can move in the radial direction of optical disk 1 with the movement of linear motor 17a.

A laser beam generated by semiconductor laser 9, which is driven by a laser controller 14, is irradiated on optical disk 1 through collimator lens 11a half prism 11b and objective lens 6. Reflection light from the disk's surface is led to half prism 11c through objective lens 6 and half prism 11b.

One of the beam components split by half prism 11c is led through convergent lens 10 to a pair of track sensors 8. The other beam component is led to the aforementioned focus sensors 7 through convergent lens 11d and knife edge 12.

The output signals of the track sensors 8 are supplied to a differential amplifier OP1 to be converted into a tracking error signal, which is then supplied to a tracking controller 16. This tracking controller 16 sends out the tracking error signal from differential amplifier OP1 to linear motor controller 17 as well as to drive coil 4. The tracking error signal is also supplied to drive coils 4 for head movement in the tracking direction.

Referring now to Fig. 2, a description will be given of the arrangement of tracking controller 16.

The tracking error signal from differential amplifier OP1 or the position signal from position detector 32 is supplied to a change-over switch SW2. This change-over switch SW2 is switched by a change-over signal from CPU 23 to have its movable contact coupled to either a fixed contact (1), (2) or (3). When change-over switch SW2 has its movable contact coupled to fixed contact (1), nothing is output from this switch SW2; when the movable contact is coupled to fixed contact (2), the tracking error signal from differential amplifier OP1 is output; and when the movable contact is coupled to fixed contact (3), the position signal from position detector 32 is output. The output of change-over switch SW2 is supplied to a phase compensator 41, which compensates the phase of the received tracking error signal or position signal and outputs the resultant signal to an amplifier circuit 42. Amplifier circuit 42 amplifies the received signal and outputs it to a driver 43, which drives the drive coil 4 in accordance with the received amplified signal.

Tracking controller 16 connects the movable contact of change-over switch SW2 to its fixed contact (2) in accordance with the change-over signal from CPU 23. The tracking error signal from differential amplifier OP1 is supplied to driver 43 through change-over switch SW2, phase compensator 41 and amplifier circuit 42. This driver 43 drives coil 4 to perform tracking control.

Tracking controller 16 also connects the movable contact of change-over switch SW2 to its fixed contact (3) in accordance with the change-over signal from CPU 23. The position signal from position detector 32 is supplied to driver 43 through change-over switch SW2, phase compensator 41 and amplifier circuit 42. Driver 43 drives coil 4 so that objective lens 6 can be held at a predetermined position.

Focus sensors 7 generates detected signals associated with a focusing state of objective lens 6, which are supplied through differential amplifier OP2 to a focusing controller 15. The output signal of this focusing controller 15 is supplied to drive coil 5, so that the position of objective lens 6 is controlled to permit the laser beam to be always on focus on optical disk 1.

A sum signal of the outputs of track sensors 8 in focusing and tracking states represents recorded information data formed as pits on tracks. This sum signal is supplied to a reproduction signal 19 which reproduces image data and address data (track number, etc.).

The aforementioned laser controller 14, focusing controller 15, tracking controller 16, linear motor controller 17, motor controller 18 and reproduction circuit 19 are all coupled through a bus line 20 to a CPU 23 and controlled by the CPU 23. This CPU 23 performs its operation based on a program stored in a memory 24. A target track number or recorded data is transferred onto bus line 20, which is further coupled with a host computer 27 that receives a video signal reproduced from reproduction circuit 19.

An A/D converter 21 is provided to permit data exchange between focusing controller 15 and CPU 23, and a D/A converter 22 is provided to permit data exchange among focusing controller 15, tracking controller 16, linear motor controller 17 and CPU 23.

Referring now to the flowchart shown in Fig. 5, a description will be given of the tracking operation of the above arrangement in coarse access mode. Assume that the movable contact of change-over switch SW2 in tracking controller 16 is coupled to the fixed contact (2) in response to the change-over signal from CPU 23 at the time of data reproduction or recording prior to track accessing.

Then, the tracking error signal from differential amplifier OP1 is supplied to driver 4 through change-over switch SW2, phase compensator 41 and amplifier circuit 42. This driver 43 drives coil 4 in accordance with the tracking error signal for tracking control.

During such tracking control, the number of a target track to be accessed is supplied to CPU 23 from an external unit (not shown). CPU 23 compares the present track number with the target track number, and selects the coarse access mode when the difference between these track numbers indicates more than several tens of tracks.

When the coarse access mode is selected, CPU 23 sends out a scale value corresponding to the target track number to linear motor controller 17 through D/A converter 22. As a result, linear motor controller 17 permits an excitation current to be applied to drive coil 13 in accordance with the scale value. The movement of linear motor 17a causes optical head 3 to move to the position corresponding to the scale value for coarse track accessing.

When optical head 3 starts moving, CPU 23 switches the movable contact of change-over switch SW2 in tracking controller 16 to the fixed contact (3) to stop the tracking. At the same time, CPU 23 renders change-over switch SW1 OFF. Consequently, in accordance with the detection signal from sensor 30, the voltage value of a signal corresponding to the position of objective lens 6 immediately before the track access is executed in coarse access mode is held (accumulated) in capacitor C of position detector 32. Accordingly, the positional locking of objective lens 6 is controlled.

That is, the movable contact of change-over switch SW2 is coupled to the fixed contact (3) by the change-over signal from CPU 23. Consequently, position detector 32 sends out, to tracking controller 16, a deviation signal that represents the difference between the voltage value of the detection signal from sensor 30 and the voltage value accumulated in capacitor C. In accordance with the deviation signal from position detector 32, tracking controller 16 causes driver 43 to drive coil 4 so that objective lens 6 is held at the position where the lens was before the track access in coarse access mode.

When optical head 3 stops moving, or when the track access in coarse access mode is completed, CPU 23 connects the movable contact of change-over switch SW2 to the fixed contact (2). As a result, the tracking error signal from differential amplifier OP1 is supplied to driver 43 through change-over switch SW2, phase compensator 41 and amplifier circuit 42. The driver 43 drives coil 4 in accordance with the tracking error signal to execute tracking control. At this time, change-over switch SW1 is rendered OFF.

Accordingly, even if objective lens 6 suspended by wire suspensions 51 swings due to the reaction of head movement while optical head 3 is moving in coarse access mode, i.e., during acceleration, a low-speed movement or deceleration of optical head 3, objective lens can be held at the position where it was before the track access in coarse access mode.

As described above, the position of objective lens 6 before the track access executed in coarse access mode, is memorized, and during access, the memorized position is compared with the present position of objective lens 6 and the lens 6 is moved in accordance with the difference between two positions to thereby hold objective lens 6 where it was before the track access. Therefore, objective lens 6 does not deviate from the position where it was before the track access.

Accordingly, the swinging of objective lens 6 in coarse access mode can be suppressed, the accuracy in coarse accessing can be improved as a consequence, and the position of objective lens 6 relative to optical head 3 comes to a stable position or at the center between permanent magnets 51, thereby providing stable tracking. In addition, the access time can be shortened.

## Claims

1. An optical disk apparatus, comprising:
(a) an optical head (3) having means (6) for converging a light beam along an axis onto an optical disk (1) which includes tracks spaced from each other in a radial direction of said optical disk (1), said optical head (3) also having means (8) for detecting a light beam reflected by the optical disk (1) and for outputting a detection signal;
(b) first driving means (4, 32) for moving the converging means (6) of the optical head (3) in a direction perpendicular to the axis of the light beam;
(c) second driving means (17a) for moving the optical head (3) in the radial direction;
(d) means (OP1), responsive to the detection signal, for generating a tracking error signal which represents a tracking error with reference to a given track of the optical disk (1);
(e) means (16, 4), responsive to the tracking error signal, for actuating the first driving means (4, 32) such that the converging means (6) follows a track of the optical disk (1);
(f) means (30) for constantly sensing the actual position of the converging means (6) and for outputting a sensing signal corresponding to the actual position; and
(g) means (17) for producing a predetermined signal used for biasing the second driving means (17a), said second driving means (17a) moving the optical head (3) from a given track to a target track in response to the predetermined signal;
characterized by:
(h) means (23, SW1, C) for storing a value of the sensing signal which the sensing means (30) outputs before the optical head (3) is moved from the given track to the target track while the converging means (6) is in its current position;
(i) means (23, SW2, 43) for stopping the track following movement of the converging means (6) during an interval when the optical head (3) is being moved from the given track to the target track;
(j) means (A2) for calculating the difference between the sensing signal value stored in the storing means (23, SW1, C) and a value of the sensing signal which the sensing means (30) outputs when the track following movement of the converging means (6) has been stopped;
(k) means (23, SW2, 43) for holding the converging means (6) at the current position when the converging means (6) is being moved from the given track to the target track in accordance with the difference calculated by the calculating means (A2); and
(l) means (23, SW2, 43, OP1) for releasing the converging means (6) from the holding means (23, SW2, 43) after the optical head (3) is moved from the given track to the target track, to thereby resume the track following movement of the converging means (6).

2. An optical disk apparatus according to claim 1, characterized in that said converging means (6) includes an objective lens (6).

3. An optical disk apparatus according to claim 1, characterized in that said detecting means (8) includes a photodetector (8).

## Patentansprüche

1. Optisches Plattenspielgerät mit:
(a) einem optischen Kopf (3) mit Mitteln (6) zum Konvergieren eines Lichtstrahls längs einer Achse auf eine optische Platte (1), welche voneinander in radialer Richtung der optischen Platte (1) beabstandete Spuren enthält, wobei der optische Kopf (3) ferner Mittel (8) zum Detektieren eines durch die optische Platte (1) reflektierten Lichtstrahls und zum Ausgeben eines Detektionssignals aufweist;
(b) ersten Antriebsmitteln (4, 32) zum Bewegen der Konvergierungsmittel (6) des optischen Kopfes (3) in eine Richtung senkrecht zur Achse des Lichtstrahls;
(c) zweiten Antriebsmitteln (17a) zum Bewegen des optischen Kopfes (3) in radialer Richtung;
(d) Mitteln (OP1), die auf das Detektionssignal ansprechen, zum Erzeugen eines Spurfehler- oder Gleichlaufabweichungssignals, das einen Spurfehler bzw. eine Gleichlaufabweichung unter Bezugnahme auf eine gegebene Spur der optischen Platte (1) repräsentiert;
(e) Mitteln (16, 4), die auf das Spurfehler- oder Gleichlaufabweichungssignal ansprechen, zum Betätigen der ersten Antriebsmittel (4, 32), so daß das Konvergierungsmittel (6) einer Spur der optischen Platte (1) folgt;
(f) Mitteln (30) zum ständigen Messen der tatsächlich Position der Konvergierungsmittel (6) und zum Ausgeben eines Meßsignals entsprechend der tatsächlichen Position; und
(g) Mitteln (17) zum Erzeugen eines vorbestimmten Signal, das zum Beeinflussen der zweiten Antriebsmittel (17a) verwendet wird, wobei die zweiten Antriebsmittel (17a) den optischen Kopf (3) als Antwort auf das vorbestimmte Signal von einer gegeben Spur zu einer Ziel- oder Targetspur bewegen;
gekennzeichnet durch:
(h) Mittel (23, SW1, C) zum Speichern eines Wertes des Meßsignals, das die Meßmittel (30) ausgeben, bevor der optische Kopf (3) von der gegeben Spur zur Ziel- oder Targetspur bewegt wird, während die Konvergierungsmittel (6) in ihrer gegenwärtigen Position sind;
(i) Mittel (23, SW2, 43) zum Anhalten der Spur-Folge-Bewegung der Konvergierungsmittel (6) während eines Intervalls, wenn der optische Kopf (3) von der gegeben Spur zur Ziel- oder Targetspur bewegt wird;
(j) Mittel (A2) zum Berechnen der Differenz zwischen dem in den Speichermitteln (23, SW1, C) gespeicherten Meßsignalwert und einem Meßsignalwert, den die Meßmittel (30) ausgeben, wenn die Spur-Folge-Bewegung der Konvergierungsmittel (6) angehalten wurde;
(k) Mittel (23, SW2, 43) zum Halten der Konvergierungsmittel (6) in der gegenwärtigen Position, wenn die Konvergierungsmittel (6) entsprechend der von den Berechnungsmitteln (A2) berechneten Differenz von der gegebenen Spur zur Ziel- oder Targetspur bewegt wird; und
(l) Mittel (23, SW2, 43, OP1) zum Lösen der Konvergierungsmittel (6) von den Haltemitteln (23, SW2, 43), nachdem der optische Kopf (3) von der gegebenen Spur zur Ziel- oder Targetspur bewegt ist, um dadurch die Spur-Folge-Bewegung der Konvergierungsmittel (6) fortzusetzen.

2. Optisches Plattenspielgerät nach Anspruch 1, dadurch gekennzeichnet, daß die Konvergierungsmittel (6) eine Objektivlinse (6) enthalten.

3. Optisches Plattenspielgerät nach Anspruch 1, dadurch gekennzeichnet, daß die Detektionsmittel (8) einen Photodetektor (8) enthalten.

## Revendications

1. Dispositif à disque optique, comprenant :
(a) une tête optique (3) possédant un moyen de convergence (6) pour rendre convergent un faisceau laser suivant un axe sur un disque optique (1) qui comporte des pistes espacées les unes des autres dans la direction radiale dudit disque optique (1), ladite tête optique (3) comportant également un moyen de détection (8) pour détecter un faisceau laser réfléchi par le disque optique (1) et pour sortir un signal de détection ;
(b) un premier moyen d'entraînement (4, 32) pour déplacer le moyen de convergence (6) de la tête optique (3) dans une direction perpendiculaire à l'axe du faisceau laser ;
(c) un second moyen d'entraînement (17a) pour déplacer la tête optique (3) dans la direction radiale ;
(d) un moyen (OP1), sensible au signal de détection, pour produire un signal d'erreur de suivi de piste qui représente une erreur de suivi de piste par rapport à une piste donnée du disque optique (1) ;
(e) un moyen (16, 4), sensible au signal d'erreur de suivi de piste, pour mettre en oeuvre le premier moyen d'entraînement (4, 32) de telle manière que le moyen de convergence (6) suive une piste du disque optique (1) ;
(f) un moyen capteur (30) pour capter constamment la position réelle du moyen de convergence (6) et pour sortir un signal capté correspondant à la position réelle ; et,
(g) un moyen (17) pour produire un signal prédéterminé utilisé pour commander le second moyen d'entraînement (17a), ledit second moyen d'entraînement (17a) déplaçant la tête optique (3) à partir d'une piste donnée jusqu'à une piste cible en réponse au signal prédéterminé ;
caractérisé par :
(h) un moyen (23, SW1, C) pour mémoriser une valeur du signal capté que le moyen capteur (30) sort avant que la tête optique (3) ne soit déplacée à partir de la piste donnée jusqu'à la piste cible alors que le moyen de convergence (6) est dans sa position courante ;
(i) un moyen (23, SW2, 43) pour arrêter, pendant un certain temps, le déplacement de suivi de piste du moyen de convergence (6), lorsque la tête optique (3) est en train d'être déplacé de la piste donnée vers la piste cible ;
(j) un moyen (A2) pour calculer la différence entre la valeur de signal capté mémorisée dans le moyen de mémorisation (23, SW1, C), et une valeur du signal capté que le moyen capteur (30) sort lorsque le déplacement de suivi de piste du moyen de convergence (6) a été arrêté ;
(k) un moyen (23, SW2, 43) pour maintenir le moyen de convergence (6) dans la position courante lorsque le moyen de convergence (6) est en train d'être déplacé de la piste donnée vers la piste cible en fonction de la différence calculée par le moyen de calcul (A2) ; et
(l) un moyen (23, SW2, 43, OP1) pour libérer le moyen de convergence (6) du moyen de maintient (23, SW2, 43) après que la tête optique (3) a été déplacée de la piste donnée à la piste cible, pour reprendre par ce moyen le déplacement de suivi de piste du moyen de convergence (6).

2. Dispositif à disque optique selon la revendication 1, caractérisé en ce que ledit moyen de convergence (6) comprend un objectif (6).

3. Dispositif à disque optique selon la revendication 1, caractérisé en ce que ledit moyen de détection (8) comprend un photodétecteur (8).
